# EUROPEAN PATENT APPLICATION

(11) **EP 4 711 288 A2**
(43) Date of publication of application: **18.03.2026**
(21) Application number: 25202861.8
(22) Date of filing: 17.09.2025
(51) Int. Cl.: B65B 13/02, B65B 13/18, B65B 13/22, B65B 57/06, B65B 61/00, B65B 65/02

(54) **CABLE TIE TENSIONING DEVICE WITH INLINE LOAD CELL**

(30) Priority: 17.09.2024 US 202463695674 P; 02.09.2025 US 202519316387
(71) Applicant: ABB SCHWEIZ AG, 5400 Baden (CH)
(72) Inventor: EAKINS, William John, 5400 Baden (CH); SCOTT, Tiffany Catherine, 5400 Baden (CH); HETRICH, Matthew, 5400 Baden (CH); ZHONG, Sheng, 5400 Baden (CH); PERIGO, Elio, 5400 Baden (CH)
(74) Representative: Zimmermann & Partner Patentanwälte mbB

(57) **Abstract**

A cable tie tensioning device is provided. The cable tie tensioning device includes a motor mechanically coupled to a lead screw drive, and a pulling shaft mechanically coupled at a first end to the lead screw drive. The cable tie tensioning device further includes a tie handling jaw mechanically coupled to a second end of the lead screw drive. The tie handling jaw is configured to at least partially receive a cable tie for tensioning of the cable tie during operation of the motor. The cable tie tensioning device further includes a sensor disposed in line with the motor and the lead screw drive.

## Description

### CROSS-REFERENCE TO RELATED APPLICATIONS

This application claims priority to United States Provisional Patent Application No. 63/695,674, filed September 17, 2024 and titled "CABLE TIE TENSIONING DEVICE WITH INLINE LOAD CELL", the entire contents of which are hereby incorporated by reference.

### TECHNICAL FIELD

The field of the disclosure relates to a cable tie tensioning device and, in particular, to an automatic cable tie tensioning tool that provides precise load control for consistent/accurate tensioning and improved cable tie cutting.

### BACKGROUND

Cable ties are used in a variety of industries, such as (but not limited to) in the telecommunication industry for bundling cables. Cable ties are generally installed and tensioned by hand, and the tail is subsequently cut by a hand tool. This can produce inconsistent and unknown tensions in the cable tie. Manually powered cable tie tensioning tools were developed to improve consistency with discrete tension settings and to reduce manual labor. Such manually powered cable tie tensioning tools include a mechanical tensioning assembly that is intended to apply tension to the cable tie. However, without regular calibration or testing, tool-to-tool variation can be quite large, resulting again in inconsistent and unknown tensions in the cable tie. In particular, the mechanical tensioning design of such tools does not offer accurate tension control. Thus, use of these tools can lead to over and under-tensioning. These tools are typically manual tools that necessitate significant user force to actuate, which can lead to worker injury, discomfort, reduced efficiency, and increased application time.

Accordingly, there exists a need for a cable tie tensioning device that allows for accurate and consistent tension application, and precise cutting after the tensioning step is completed. These and other needs are met by the exemplary cable tie tensioning device discussed herein.

This section is intended to introduce the reader to various aspects of art that may be related to various aspects of the present disclosure described or claimed below. This description is believed to be helpful in providing the reader with background information to facilitate a better understanding of the various aspects of the present disclosure. Accordingly, it should be understood that these statements are to be read in this light and not as admissions of prior art.

### BRIEF DESCRIPTION

In one embodiment, a cable tie tensioning device is provided. The cable tie tensioning device includes a motor mechanically coupled to a lead screw drive, and a pulling shaft mechanically coupled at a first end to the lead screw drive. The cable tie tensioning device further includes a tie handling jaw mechanically coupled to a second end of the lead screw drive. The tie handling jaw is configured to at least partially receive a cable tie for tensioning of the cable tie during operation of the motor. The cable tie tensioning device further includes a sensor disposed in line with the motor and the lead screw drive.

In another embodiment, a method for tensioning a cable tie is provided. The method includes engaging at least a portion of the cable tie with a tie handling jaw of a cable tie tensioning device. The cable tie tensioning device includes a motor mechanically coupled to a lead screw drive, a pulling shaft mechanically coupled at a first end to the lead screw drive, and the tie handling jaw mechanically coupled to a second end of the lead screw drive. The method further includes measuring a tension applied to the cable tie with the tie handling jaw with a sensor disposed in line with the motor and the lead screw drive of the cable tie tensioning device.

In another embodiment, another cable tie tensioning device is provided. The cable tie tensioning device includes a lead screw drive, a direct current (DC) brushless motor, a pulling shaft, a tie handling jaw, and a load sensor. The lead screw drive has a first end and a second end. The DC brushless motor is mechanically coupled to the lead screw drive. The pulling shaft is mechanically coupled at the first end of the lead screw drive. The tie handling jab is mechanically coupled to the second end of the lead screw drive, and the tie handling jab is configured to at least partially receive a cable tie for tensioning of the cable tie during operation of the DC brushless motor. The load cell is disposed in line with the DC brushless motor and the lead screw drive and is disposed concentrically around the lead screw drive.

Various refinements exist of the features noted in relation to the above-mentioned aspects. Further features may also be incorporated in the above-mentioned aspects as well. These refinements and additional features may exist individually or in any combination. For instance, various features discussed below in relation to any of the illustrated examples may be incorporated into any of the above-described aspects, alone or in any combination.

### BRIEF DESCRIPTION OF DRAWINGS

The following drawings form part of the present specification and are included to further demonstrate certain aspects of the present disclosure. The disclosure may be better understood by reference to one or more of these drawings in combination with the detailed description of specific embodiments presented herein.
FIG. 1 is a front perspective view of an exemplary cable tie tensioning device.
FIG. 2 is a rear perspective view of an exemplary cable tie tensioning device of FIG. 1.
FIG. 3 is a transparent view of an exemplary cable tie tensioning device of FIG. 1.
FIG. 4 is a transparent view of an exemplary cable tie tensioning device of FIG. 1.
FIG. 5 is a cross-sectional view of an exemplary cable tie tensioning device of FIG. 1.
FIGS. 6A and 6B are cross-sectional views of an exemplary cable tie tensioning device of FIG. 1.
FIG. 7 is an exploded view of an exemplary cable tie tensioning device of FIG. 1.
FIG. 8 is an exploded detailed view of a cutting assembly of an exemplary cable tie tensioning device of FIG. 1.
FIG. 9 is an exploded detailed view of a cutting assembly of an exemplary cable tie tensioning device of FIG. 1.
FIG. 10 is an exploded detailed view of a cutting assembly of an exemplary cable tie tensioning device of FIG. 1, including a wave spring acting as an actuator member.
FIG. 11 is exploded detailed view of a cutting assembly of an exemplary cable tie tensioning device of FIG. 1, including magnets acting as an actuator member.
FIG. 12 is a perspective view of a user interface of an exemplary cable tie tensioning device of FIG. 1.
FIG. 13 is a perspective view of a user interface of an exemplary cable tie tensioning device of FIG. 1.
FIG. 14 is a front perspective view of a user interface assembly of an exemplary cable tie tensioning device of FIG. 1.
FIG. 15 is a rear perspective view of a user interface assembly of an exemplary cable tie tensioning device of FIG. 1.
FIG. 16 is a cross-sectional view of a user interface assembly of an exemplary cable tie tensioning device of FIG. 1.
FIG. 17 is a flowchart for operation of a user interface of an exemplary cable tie tensioning device of FIG. 1.
FIG. 18 is a block diagram of an exemplary cable tie tensioning device of FIG. 1.
FIG. 19 is a chart of load cell data with tension set to 25 lbs, indicating repeatability and reproducibility of the load cell operation.
FIG. 20 is a flowchart for operation of an exemplary cable tie tensioning device of FIG. 1.

Corresponding reference characters indicate corresponding parts throughout the several views of the drawings. Although specific features of various examples may be shown in some drawings and not in others, this is for convenience only. Any feature of any drawing may be referenced or claimed in combination with any feature of any other drawing.

### DETAILED DESCRIPTION

The following detailed description and examples set forth preferred materials, components, and procedures used in accordance with the present disclosure. This description and these examples, however, are provided by way of illustration only, and nothing therein shall be deemed to be a limitation upon the overall scope of the present disclosure. The following terms are used in the present disclosure as defined below.

The exemplary cable tie tensioning device discussed herein is a power tool, specifically an electronic power tool designed for accurate and reliable cable tie tensioning and cutting. The device includes a load cell which is used to measure applied tension on a cable tie, and an incorporated closed-loop control system for bringing the tie to a set tension. The device can be used in various industries, for example, aviation, electronics, automotive, construction, telecommunications, or the like, for cable management (such as bundling, securing, and/or fastening cables, wires, or other components to be bundled). The load cell and closed-loop control system offer an intelligent, automatic cable tie tensioning tool with precise, closed loop tension control.

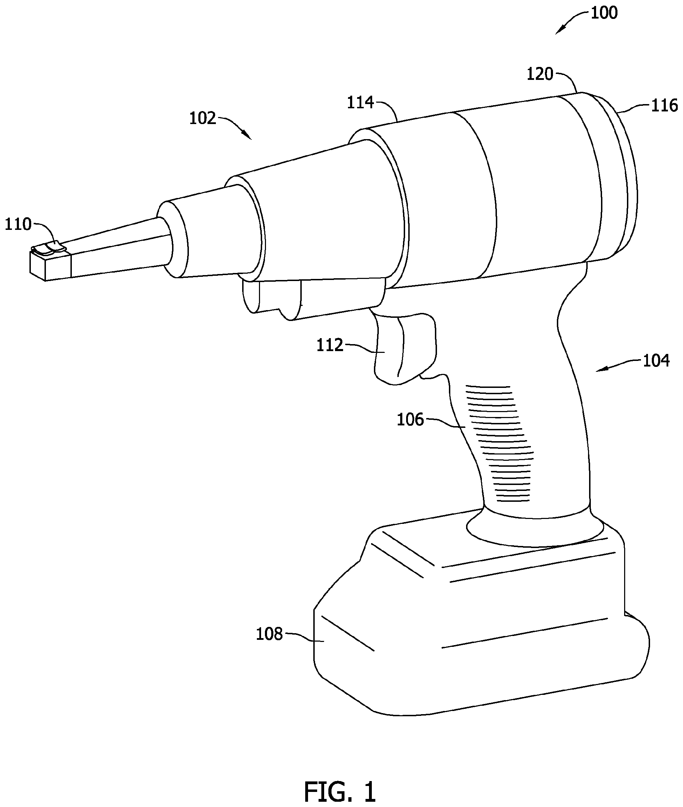

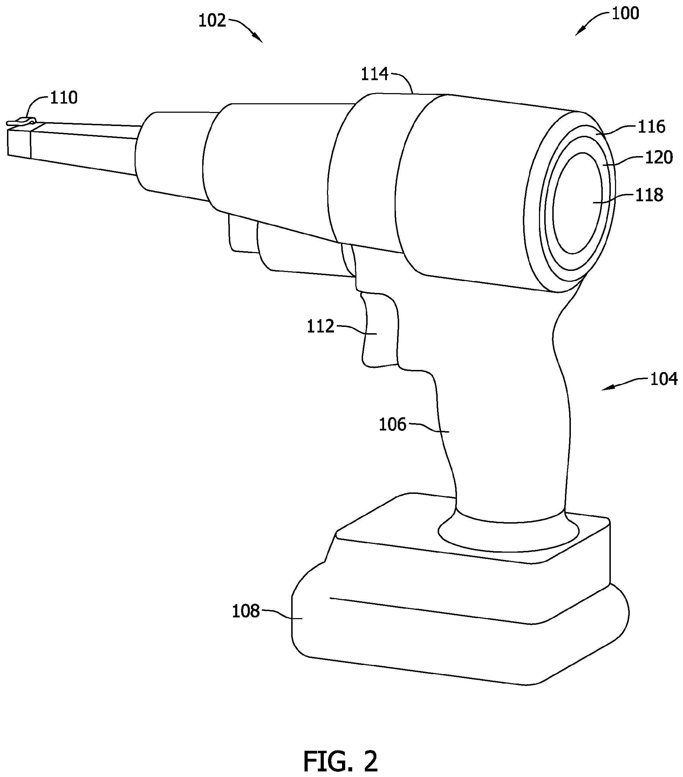

FIGS. 1-2 are perspective views of an exemplary cable tie tensioning tool or device 100 (hereinafter "device 100"). The device 100 can have a configuration/appearance similar to a power tool, including a grip section 104 and an actuator section 102 (for example, extending substantially perpendicularly from the grip section 104). The grip section 104 includes a handle 106 configured and dimensioned to be grasped by a hand of the user, and a power source 108 (for example, a removable, rechargeable battery) connected to the endpoint of the handle 106. The handle 106 can have an ergonomic configuration for a comfortable yet secure grip by the user.

The actuator section 102 includes a tie handling jaw 110 at a distal end, a battery-equipped gripper or trigger 112 disposed at a top end of the handle 106, and a main body or housing 114 which includes the main electro-mechanical components of the device 100. The actuator section 102 includes a user interface 116 at a proximal end (for example, opposing the distal end with the tie handling jaw 110). The user interface 116 can include a graphical user interface (GUI) 118 (for example, a screen) with a rotary bezel 120 surrounding the user interface 116 with haptic feedback (for example, magnets embedded in the bezel frame). In some embodiments, the device 100 can be about, for example, 8" x 2.5" x 11" in size and the total weight of the device 100 can be about 3.6 lbs.

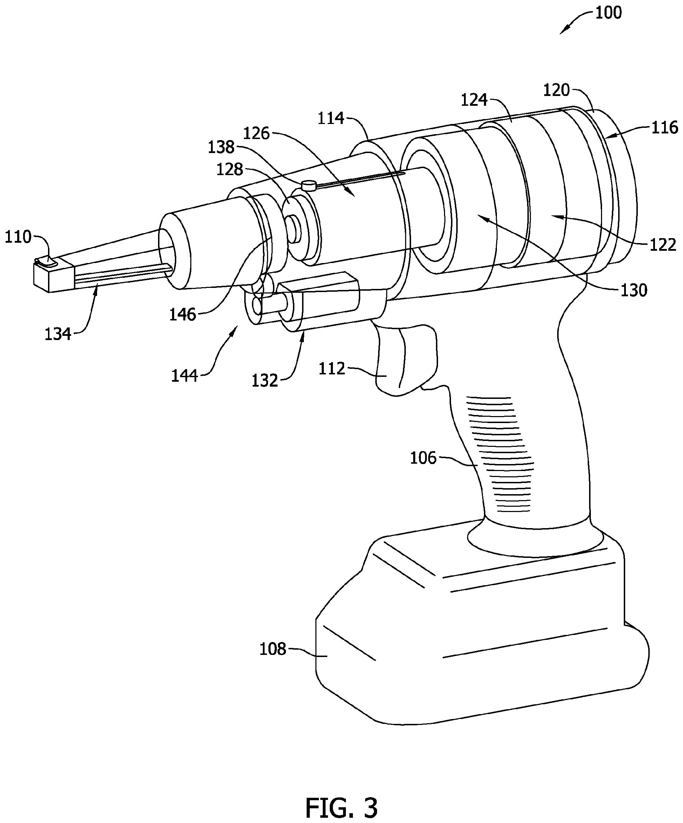

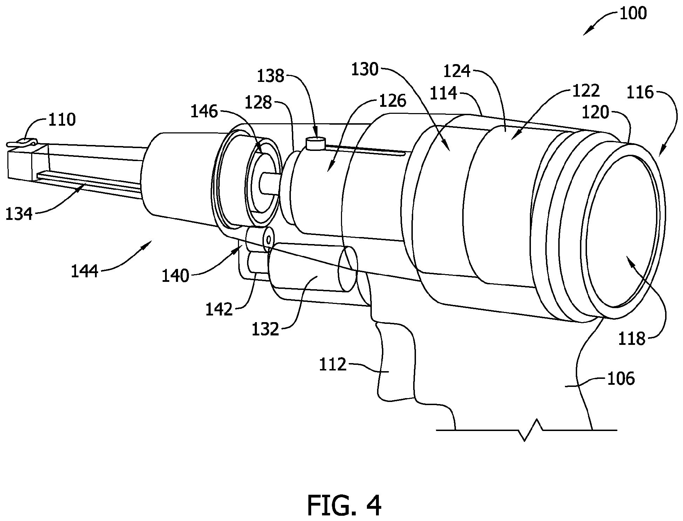

FIGS. 3-4 are transparent views of the device 100. In some embodiments, the power source 108 can be, for example, an 18 V battery, or the like, configured to provide electrical power to various components of the device 100. For example, the power source 108 can provide power to a tensioning assembly 122 which includes a tensioning electric motor 124. The power source 108 can be removable from the device 100 for charging or can be directly connected to an external power source for recharging which coupled to the device 100.

The tensioning assembly 122 includes the electric motor 124, for example, a brushless motor, and a drive 126 to control the motor 124 and a mechanical power transmission system 128 housed in the tube of the drive 126. The tensioning assembly 122 can include a planetary gearbox 130 configured to regulate the power applied by the tensioning assembly 122 to the cable tie. The tensioning assembly 122 includes a load cell 138, for example, a 100 kilogram (kg) load cell, or the like, disposed at least partially within the drive 126 as part of the power transmission system 128.

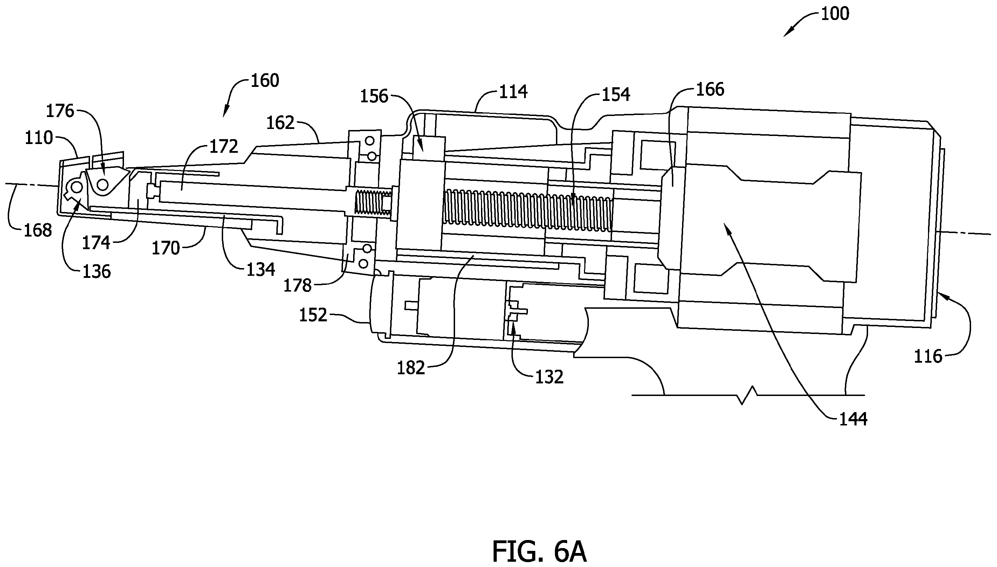

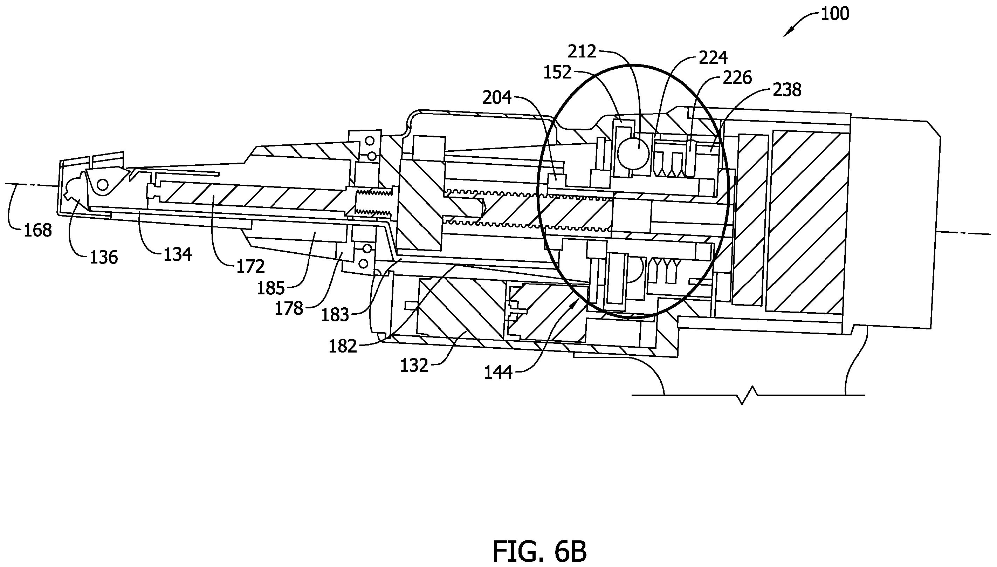

The device 100 includes a cutting assembly 144 to provide a cut-off mechanism for cable tie installation after tensioning has been applied. The cutting assembly 144 includes a dedicated gear motor 132 (for example, a 4w 17 mm OD motor) mechanically connected to a linkage 134 for actuating movement of a cutoff blade 136 (see FIG. 6). The gear motor 132 includes an assembly of interconnected spur gears 140, 142 for transferring motion to the linkage 134. The cutting assembly 144 can include a spring mechanism 146 with a ramp interconnecting the gears 140, 142 and the gear motor 132 with the linkage 134 for performing the cutting motion.

As discussed in detail below, the cutting assembly 144 includes an actuator member (for example, a wave spring or opposing magnetic plates) configured to provide an axial biasing force to initiate the cutting action. The cutting assembly 144 includes ball bearings that move in a rotary manner relative to a gear with tear-shaped pockets that guide the ball bearings further inward or further outward relative to the gear, thereby imparting force on a sliding shroud. The cutting motor drives the gear until the ball bearings are positioned at an outermost or perched position relative to the gear face. When the tensioning operation is complete and the load cell has detected that the target tension is reached, the cutting motor only slightly rotates the gear, that is substantially less than a complete rotation of the gear, which results in the ball bearings dropping into the respective pockets of the gear. This results in an axial biasing force applied by the actuator members to the shroud such that the shroud slides axially in reverse. The shroud axially pushes or slides a tube/casing with a face in contact with the cutting mechanism linkage. Pushing on the tube/casing applies a force on the linkage, and sliding of the linkage creates pivoting of the blade at the endpoint of the device. A spring within the head biases the blade back into the neutral or retracted position after the cutting action is complete by biasing the linkage away from the endpoint of the device.

The user interface 116 provides information and control features for use of the device 100. The user interface 116 can include a display screen (for example, graphical user interface 118) and a rotatable bezel 120. The user interface 116 allows for parameter input, for example, user defined tension presets, or the like, and adjustment of the tension. The user interface 116 can display information to the user, for example, battery state/level, cycle count, errors, combinations thereof, or the like. In some embodiments, the device 100 can include an optical scanning system configured to identify the cable tie to be installed, with the recommendation for the type of cable tie output on the user interface 116. In some embodiments, the device 100 can include a consumable cable tie calibration process, for example, allowing the user to implement any type of cable tie with the device 100 in an accurate manner.

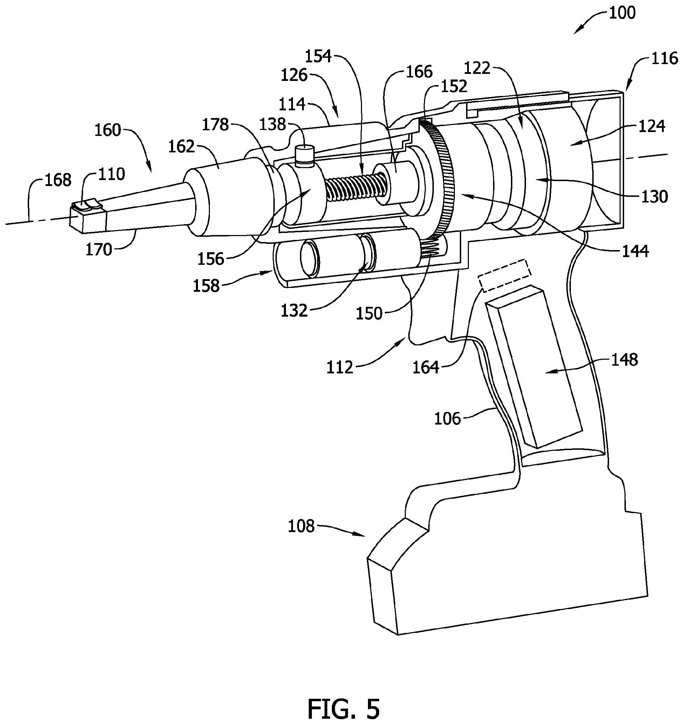

FIGS. 5, 6A and 6B are cross-sectional views of the device 100. In some embodiments, the planetary gearbox 130 can have a reduction of approximately 10:1. The handle 106 can include a brushless motor driver 148 for actuating the motor 124. The trigger 112 can allow for a proportional input, thereby allowing the user to choose the tension being applied to the cable tie based on the pressure applied to the trigger 112. The trigger 112 is connected to the motor driver 148 for actuation of the motor 124.

The cutting assembly 144 includes a separate, dedicated motor 132 for cutting the cable tie (i.e., a separate motor 124 for tensioning of the cable tie and cutting of the cable tie). In particular, the cutting motor 132 does not operate to perform the cutting action until the load cell has detected that the target cable tie tension has been established. The motor 132 can thereby remain idle until cutting action is needed. The motor 132 for the cutting assembly 144 can include a spur gear shaft 150 extending therefrom. Although the motor 132 is offset from the axis 168, the remaining portions of the cutting assembly 144 are aligned along the axis 168. The teeth of the gear shaft 150 engage with teeth of a gear 152 (for example, first plate) within the housing 114, thereby driving rotation of the gear 152. In some embodiments, the distal end of the housing 114 surrounding the motor 132 can include a light source 158 (for example, an LED light) for illuminating the working area of the user. In some embodiments, the light source 158 can be triggered into the "on" position with minimal pressure applied to the trigger 112. In some embodiments, the device 100 can include the optical sensor adjacent to the light source 158 for optically sensing cable ties being used with the device 100.

Separately from the cutting assembly 144 operation, the device 100 includes a tensioning assembly 122 configured to be operated independently of the cutting assembly 144. The tensioning assembly 122 includes a motor 124 which drives rotation of a nut 166 about a lead screw drive 154, with axial movement of the lead screw drive 154 creating a pulling force on the cable tie. The distal end of the screw drive 154 can include an inline strain gauge 156. In some embodiments, the strain gauge 156 can have a capacity of about, for example, 0-100 kg, and a zero balance of about, for example, ±2%.

The tensioning force can be generated by the electric motor 124, which is powered by the power source 108. In some embodiments, the power source 108 can be, for example, an OEM 18650 based battery rated at 2.0 AH, an external power source, or any other type of power source known in the industry. The brushless motor 124 is integrated into the main body or housing 114 and is regulated by a brushless motor drive 148. The drive 148 is housed in the handle 106. A single or multiple PCB board 164 systems can be installed with the drive 148 in the handle 106. The brushless motor 124 increases torque by a planetary gearbox 130 with an approximate reduction of 10:1. The rotational power generated by the brushless motor 124 is transferred to the nut 166 positioned concentrically over a lead screw drive 154. The nut 166 threads and rotates over the lead screw drive 154 based on actuation of the motor 124, which moves the lead screw drive 154 axially within the device 100. In particular, as discussed herein, the nut 166 rotates to drive the lead screw drive 154 in the proper direction along a central longitudinal axis 168. The rotational position of the lead screw drive 154 remains the same during use of the device 100.

The lead screw drive 154 is connected to an inline strain gauge 156. The drive 154, strain gauge 156 and motor 124 are concentrically aligned along the same central longitudinal axis 168. This allows for accurate readings by the strain gauge 156, as well as a more compact assembly of the device 100. Concentrically positioning the strain gauge 156 relative to the screw drive 154 enables precise measurement of applied tensioning force without requiring rigid components or complex designs, thereby reducing cost, complexity and potential deformation of force transferring members. The tension load cell (i.e., the strain gauge 156) is positioned between the lead screw drive 154 and the cable tie grip. As the nut 166 rotates along the lead screw drive 154, axial movement of the drive 154 is transferred through the load cell (for example, strain gauge 156) to the tie gripping cam/pawl mechanism (for example, the tie handling jaw 110). As the motor 124 drives rotation of the nut 166 along the lead screw drive 154, this rotation initiates movement of the lead screw drive 154 along an axial direction to move the tie grip in a backwards direction, thereby effecting the tie tension action. As discussed herein, the user interface 116 allows the user to input the desired tension levels and allows for monitoring the applied tension with real-time feedback based on the strain gauge 156 signals. This allows for fine tension load control in a continuous manner.

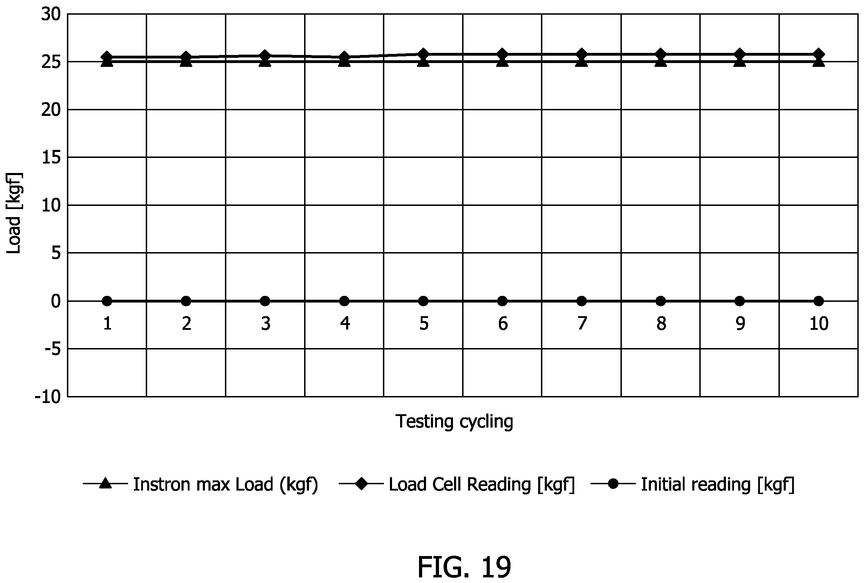

In particular, the strain gauge 156 transmits signals to the user interface 116 to display the tension applied to the cable time in real-time. Because the load cell is positioned between the lead screw drive 154 and the tie grip mechanism, the load cell is able to record the tension generated in the cable tie in real-time. With calibration and control, the load cell enables a consistency in tension control in the device 100. For example, FIG. 19 shows a chart of testing of the load cell with tension repeatedly applied at 25 lbs. The chart shows that the load cell was able to reach the desired load consistently and returns to zero when tension was released, confirming repeatability and reproducibility of operation. After installation, the cutting mechanism automatically trims excess cable tie material, allows a clean result/installation.

By incorporating the strain gauge 156 in a concentric and inline manner with the motor 124 and the screw drive 154, the tensioning force applied to the cable tie is directly measured. This provides a consistent and precise tension on the cable ties being bundled together. Inclusion of the strain gauge 156 allows for self-tension calibration in the device 100 without external equipment. This ensures a tool-to-tool consistency, allowing for the same tension with the same accuracy to be achieved among different tools if the tension setting is the same. The load cell allows for fine tension control by the user through the real-time feedback. The device 100 prevents over-tightening or under-tightening due to the direct precise measurement of the force and control/feedback, reducing the risk of damage or failure of components being secured or bundled together, and ultimately improving the overall safety during installation or maintenance processes. Further, because the load cell is in line with the draw and tension mechanism, the tensioning nozzle (for example, head 160) can rotate 180 degrees or 360 degrees about the inline axis, increasing the maneuverability of the device 100. In addition, the in-line configuration allows for a more compact configuration of the device 100, improving maneuverability in tight spaces.

The strain gauge 156 monitors the tension force in the mechanical lines during the tensioning action on the cable tie and acts as a closed-loop feedback control for adjusting operation of the motor 124 to ensure accurate and consistent tension is applied to the cable tie. The rating of the strain gauge 156 can be in the range of about, for example, 10-120 lb_{f,}, inclusive, depending on the rating of the device 100. The strain gauge 156 is linked to the tool head 160. The head 160 can be coupled to the device 100 using a chuck 162, allowing the device 100 to be used with various heads 160 to accommodate tensioning of different types of cable ties, for example. In some embodiments, the head 160 can operate substantially similarly in structure and function to, for example, the ERG50 cable tie installation tool sold by ABB at https://new.abb.com/products/7TAA131790R0001/erg50).

The head 160 can include a body 170 which encloses a central pulling shaft 172 for tensioning of the cable tie. One end of the shaft 172 is configured to connect to the lead screw drive 154, while the opposing end of the shaft 172 connects to a coupler 174 associated with the tie handling jaw 110. The tie handling jaw 110 includes a pulling pawl 176 connected by a hinge relative to the coupler 174, and mechanically coupled to the shaft 172. Movement of the shaft along the axis 168 rotates the pawl 176 about the hinge to secure and tighten the end of the cable tie. The blade 136 of the cutting assembly 144 is similarly hinged connected to the coupler 174. The entire head 160 is able to rotate 360 degrees relative to the device 100 (for example, the housing 114) at joint 178 in a controlled manner, allowing the user to tighten cable ties in any orientation. In some embodiments, the device 100 can include a mechanism that allows the user to selectively rotate the head 160 relative to the housing 114 into the desired radial position at joint 178, and a locking feature to engage and maintain the head 160 in the selected position. In some embodiments, the locking feature can include radially positioned detents (for example, ball spring plunger, or the like), which allow for temporary positioning and engagement in different orientations. In some embodiments, rotation and locking of the head 160 can be in predetermined radial increments, for example, every 10 degrees, or the like.

The head 160 is configured to receive and grip at least a portion of the cable tie and is driven by the system main motor (for example, motor 124) in a reciprocating manner through the tension cycle. The reuse of the tensioning head 160 allows the rotation of the installation head 160 by 360 degrees about the central pulling shaft 172. The inline strain gauge 156 communicates to the central control system embedded in a PCB board 164, monitoring the tensioning force in real-time. The device 100 can therefore monitor the tensioning force being applied to the cable tie in real-time, and this information can be displayed to the user via the user interface 116 to allow for adjustment by the user, if needed.

As discussed herein, in some embodiments, the device 100 can include a spring force to regulate the cutting action with the cutting assembly 144. For example, the cutting action can be activated when the spring force reaches its predetermined setting. In some embodiments, the cutting action can be performed using opposing magnetic forces that bring together two plates, which drive the blade 136 motion. The cutting action performed by the cutting assembly 144 can be triggered by control of a gear motor 132 separate from the motor 124 for operation of the tensioning assembly 122. The tensioning and cutting motors 124, 132 are therefore separate from each other. The gear motor 132 can be located below the guide tube close to the trigger 112 handle. In some embodiments, as the inline gauge 156 detects the tensioning force reaching the predetermined tension setting, the gear motor 132 can be activated and starts to rotate to initiate the cutting process. In some embodiments, the cutting assembly 144 operation can be entirely separated from the tensioning assembly, allowing the cutting cycle to initiate at any time (for example, mechanically independent other than being supported by the same parent bodies). The cutting and tensioning assemblies are therefore not mechanically interlocked, providing for freedom to manage the cutoff function for the most efficient performance. For example, control of the timing for cutoff can be performed based on the size of the cable tie and/or the tensioning force applied. The rotational action from the gear motor 132 is transferred by a screw (for example, spur gear shaft 150) to the cutting mechanism or assembly 144. This mechanism includes a circular ball-regulated cut-off action, discussed in greater detail below.

The cable tie installation processes, including tensioning, locking and cutting, can be controlled by a microcontroller (for example, PCB board 164, a PCB associated with the user interface 116, or the like). The desired tensioning force can be pre-set or input using the user interface 116 and, in some embodiments, a rotational bezel 120. The force generated by the tensioning brushless motor 124 can be monitored in real-time by the inline strain gauge 156. The measured force can be displayed in-real time on the display screen of the user interface 116 to indicate to the user whether the desired preset tensioning force is being achieved, and the status of the tensioning process. The control system includes a closed-loop control formed by the user interface 116, the tensioning assembly 122, and the gauge 156, which allows the operator to inspect and control the tie installation process, ensuring the repeatability and reproducibility of the installation.

The device 100 therefore provides a controlled automatic cable tie installation in a repeatable, consistent and accurate manner. The tensioning force can be pre-set and monitored in real-time during the tie installation. The device 100 includes a cutting mechanism which is driven by a separate gear motor 132. The cutting mechanism achieves and maintains a precise tensioning force in the bundle. The device 100 includes a screen and tunable bezel, instead of a mechanical/spring rotating mechanism. The device 100 incorporates an intelligent system which allows for a precise tensioning force reading and real-time monitoring of the tensioning processes, with a central controller. The tensioning and cutting mechanisms can be monitored and regulated by a central microcontroller. The processes are coordinated to achieve a precise and desired tensioning force in the bundled cable tie. The device 100 can be operated with a rechargeable battery and/or an external power source. Two discrete electric motors are used for the tensioning and cutting mechanisms, respectively. A planetary ball-scheme is used to operate the cutting process. The device 100 can mate with a variety of tool heads 160 for interchangeable swapping of installation tension. Tool heads 160 can be designed for a larger range of installation tensions, providing greater flexibility for use of the device.

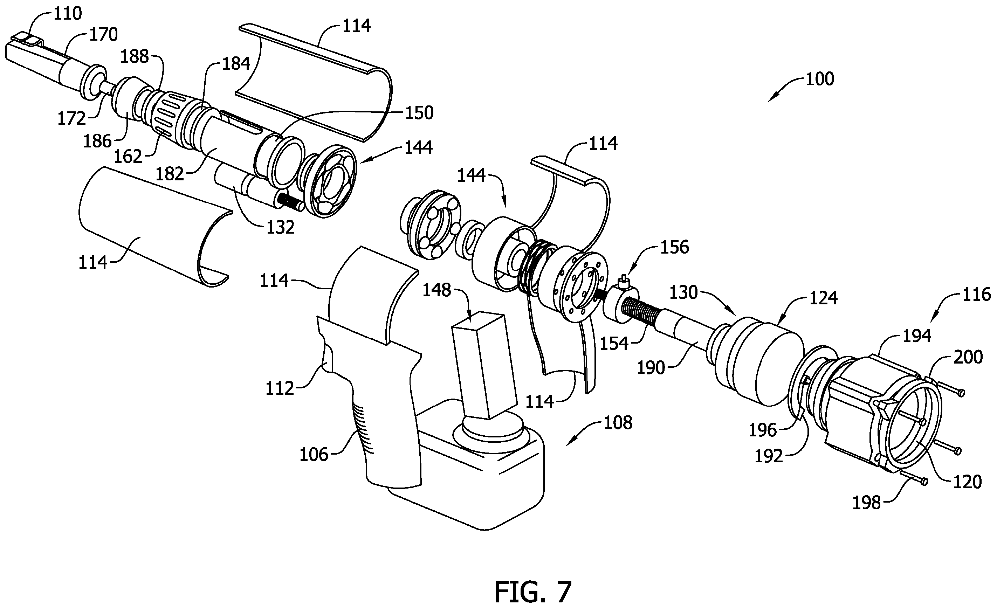

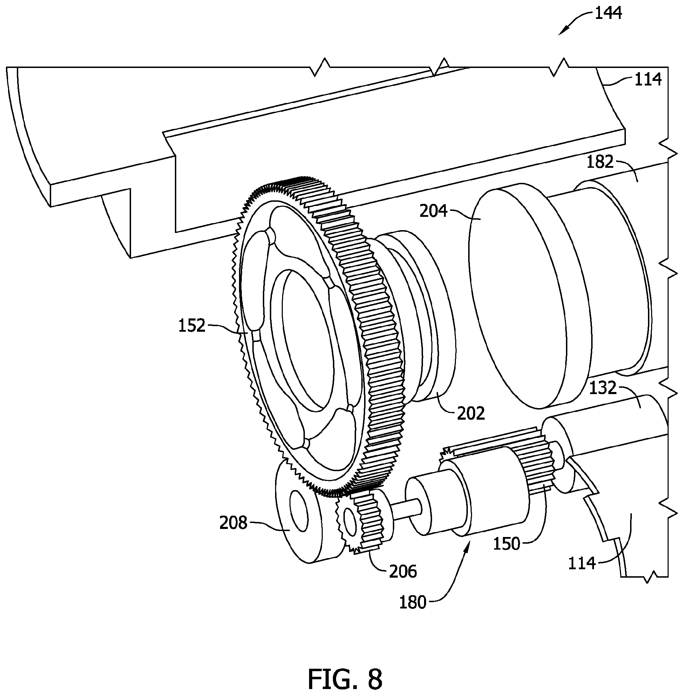

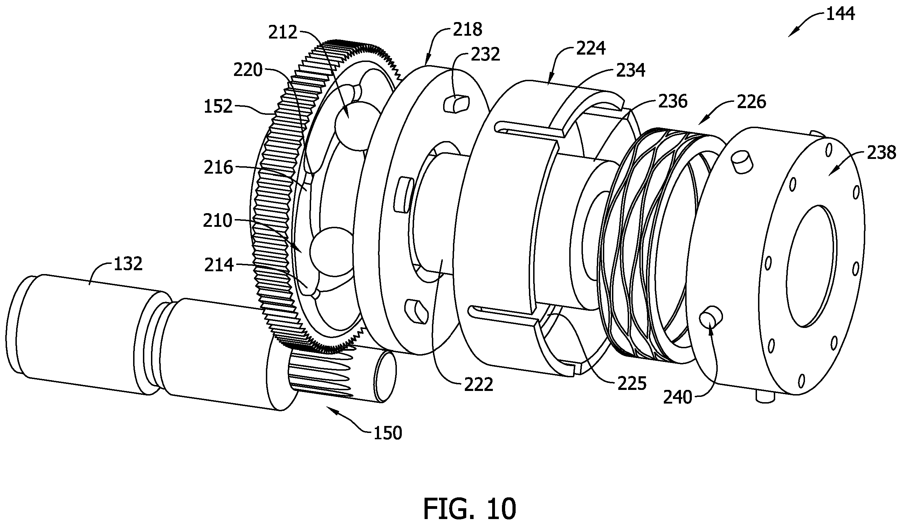

FIG. 7 is an exploded view of the device 100, and FIGS. 8-11 are detailed exploded views of the cutting assembly 144 of the device 100. The cutting assembly 144 can include an encoder 180 in mechanical communication with the shaft 150 associated with the motor 132 (see FIG. 8). In some embodiments, the encoder 180 can be an absolute type, 10-bit analog output, with a 0.125 inch diameter shaft. In some embodiments, the motor 132 for the cutting assembly 144 can be, for example, a 16 mm brushed direct current (DC) motor with 18-24 V, no less than 20 watt output, and can include neo-based/ball or sintered bearings, with 130-150:1 reduction and a 4 mm output shaft.

In some embodiments, the load cell 138 and strain gauge 156 can be an inline type with m6x1 threads on both ends to allow for securing to the threaded screw drive 154. In some embodiments, the load cell 138 and strain gauge 156 can be, for example, 100 kg capacity, with cable exiting side and cable of flat ribbon type. In some embodiments, the motor 124 can be a brushless DC motor with 300 watts output, 10-20 V, a radial flux design, a compact aspect ratio of 30-45 mm diameter, and a max 25 mm depth.

The driver 148 can be a discrete driver board, for example, not integrated with the trigger 112 assembly. The driver 148 provides a stand-alone board with inputs for speed and direction. In some embodiments, the user interface 116 can include a 1.28 inch diameter screen with 65k RGB color display having a round configuration. In some embodiments, the screen can be an LCD 240x240 resolution screen, with 3.7V and 500 mA characteristics. In some embodiments, the user interface 116 can include a GC9A01 and SPI embedded interface.

The device 100 can include an outer tube or casing 182 positioned at least partially over the cutting assembly 144 in a sliding manner and disposed adjacent to the chuck 162. A washer 184 can be positioned between the casing 182 and the chuck 162. An adapter 186 can be disposed between the body 170 of the head 160 and the chuck 162, with the adapter 186 receiving the head 160 and locking in place as part of the nested assembly of the head 160. One or more washers 188 can be disposed between the adapter 186 and the chuck 162.

A shaft 190 can extend from the gearbox 130, with the screw drive 154 extending from the shaft 190. A fixation bracket 192 can be disposed between the motor 124 and a housing 194 for the user interface 116. The bracket 192 can be substantially circular or semi-circular in configuration, and complementary to the shape of the housing 194. The bracket 192 can include radially separated extensions 196 with threaded openings configured to receive complementary fasteners 198 (for example, screws) to secure a fastening ring 200 over the bezel 120 and against the front face of the housing 194.

With reference to FIGS. 6A, 6B and 8-11, the gear 152 associated with the cutting assembly 144 includes an extension 202 configured to be at least partially received within an opening of an inner casing 204 disposed within the outer casing 182. The extension 202 can be positioned concentrically within the cutting assembly 144 in a sliding manner. The casing 182 is configured to slide axially along axis 168, and a front surface, edge or face of the casing 182 is configured to be in abutting contact with the end of the cutting linkage 134 at point 183 (see FIG. 6B). As discussed below, during the biasing action performed by the spring 226, the casing 182 is urged forward along axis 168 towards the front of the device 100. Such movement imparts a force on the linkage 134 at point 183, which actuates the blade 136 to pivot about a hinge connection, resulting in the cutting action. The cutting assembly 144 can include a spring 185 coupled to the linkage 134, with the spring 185 applying a biasing force on the linkage 134 to return it to the "neutral" position, thereby retracting the blade 136 after cutting action is completed.

The teeth of the shaft 150 associated with the motor 132 are in contact with the teeth of the gear 152 to drive the cutting assembly 144 operation. The encoder 180 includes a shaft with a gear 206 in contact with the teeth of the gear 152, thereby allowing the encoder 180 to capture the radial position of the gear 152. This positional information can be used by the device 100 to display on the user interface 116, for example, whether the cutting operation has been completed. One or more washers 208 can be used in the assembly to maintain the desired position of the components relative to each other.

The gear 152 includes an inner face with radially separated ramped pockets 210 formed therein. In some embodiments, the gear 152 can include five ramped pockets 210 radially spaced from each other. Each ramped pocket 210 includes a groove shaped to essentially form a track for ball bearings 212 (for example, 5 mm ball bearings, or the like) to travel at least partially in and out of the pocket as the gear 152 is rotated. Each groove includes a first end 214 configured and dimensioned to receive the respective ball bearing 212 deeper within the body of the gear 152 (for example, a greater width and depth), and an opposing second end 216 configured and dimensioned to push the ball bearing 212 outward from the inner face of the gear 152 (for example, a smaller width and depth). In particular, the groove narrows and becomes shallower from the first end 214 to the second end 216.

The adjacent pockets 210 are spaced by intermediate sections 220 which guide the bearings 212 from one pocket 210 to the next, which define the outermost or highest point of positioning for the ball bearings 212 relative to the pockets 210. As the gear 152 is actuated to rotate with the motor 132, the bearings 212 drop deeper into the groove at the first end 214 and gradually travel along the groove up and at least partially out of the groove at the second end 216, at which point the bearings 212 extend further from the inner face of the gear 152 than at the first end 214. As discussed herein, such movement of the bearings 212 imparts an axial force against a passive disc 218 disposed adjacent to the gear 152.

Specifically, the motor 132 can actuate rotation of the gear 152 such that the ball bearings 212 are positioned at the intermediate sections 220, i.e., the highest point of positioning relative to the front face of the gear 152. This ensures that when cutting action is needed, the smallest amount of force is needed to move the ball bearings 212 into the first ends 214 of the pockets 210, which provides the quickest response for cutting. When the device 100 receives a signal from the load cell that the target tension on the cable tie has been achieved, the cutting action can be initiated. This can be achieved by actuation of the motor 132 to only slightly rotate the gear 152, which forces the ball bearings 212 to drop into the pockets 210. The point of dropping of the ball bearings 212 into the first ends 214 creates the cutting action with the blade 136. The motor 132 can continue to rotate the gear 152 after the cutting action is completed until the ball bearings 212 are again positioned at the sections 220. At this stage, the motor 132 can stop and remains in idle for the next tensioning stage to complete.

In particular, the passive disc 218 can be positioned over an inner shaft 222 and is movable relative to the gear 152 along the central longitudinal axis 168. The cutting assembly 144 includes a shroud 224 (for example, an umbrella shroud) slidably disposed over the shaft 222. The shroud 224 includes a body having a substantially cylindrical configuration and forming a hollow enclosure configured to receive an actuator mechanism. In some embodiments, the actuator mechanism can be a wave spring 226 (for example, a 65 lb wave spring). In some embodiments, the actuator mechanism can be two magnetic plates 228, 230 (for example, K&J 1.5x0.75x125, 17.1 lbs per side magnetic plates, or the like).

The passive disc 218 can include protrusions 232 extending from the front face and configured to engage with complementary openings or slots 225 in the rear face of the shroud 224 such that the passive disc 218 and shroud 224 can couple together for sliding movement over the shaft 222. The slots 225 are dimensioned greater in radial length than the width or length of the protrusions 232. This allows for up to 4 degrees of radial motion of the disc 218 relative to the shroud 224 without actuation of the motor 132 or rotation of the gear 152. The shroud 224 includes alignment slots 234 formed in the body and radially separated from each other. The interior of the enclosure formed by the shroud 224 can include a central longitudinal extension 236 defining a substantially cylindrical configuration.

The cutting assembly 144 includes a fixed disc 238 defining a substantially cylindrical configuration and including alignment pins 240 radially extending from the exterior surface. The alignment pins 240 are configured to at least partially enter the alignment slots 234 of the shroud 224. In particular, as the shroud 224 slides along the shaft 222, engagement of the pins 240 within the slots 234 maintains alignment of the shroud 224 relative to the disc 238. The disc 238 is intended to maintain the position of the actuator mechanism within the enclosure of the shroud 224, with the inner surface of the shroud 224 and the rear face of the disc 238 providing surfaces upon which the actuator mechanism can apply a force.

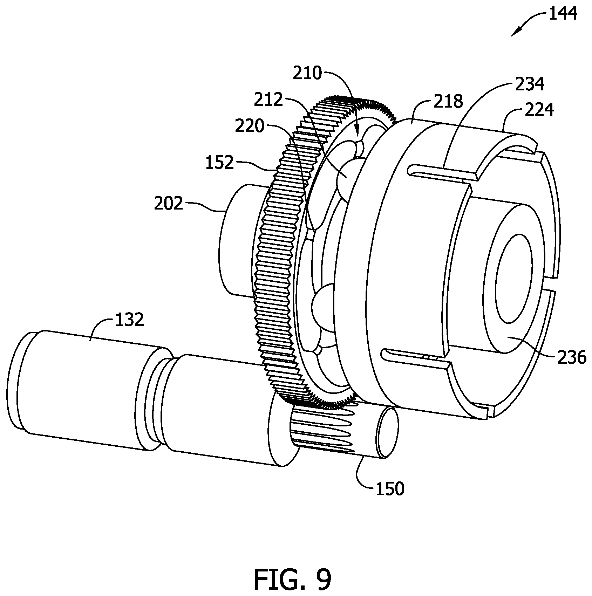

For example, when a wave spring 226 is used, compression of the spring 226 between the shroud 224 and the disc 238 creates a biasing force urging separation of the shroud 224 and the disc 238. Similarly, when the opposing pole magnetic plates 228, 230 are used, positioning the plates 228, 230 closer to each other increasing the biasing force urging separation of the shroud 224 and the disc 238. In operation, as the gear 152 rotates and the bearings 212 are pushed outward from the inner face of the gear 152, the bearings 212 apply a force on the passive disc 218 to slide the shroud 224 axially along the shaft 222. Such sliding of the shroud 224 increases the biasing force of the actuator mechanism by moving the shroud 224 closer to the disc 238. The assembly 144 is maintained with the ball bearings 212 at the intermediate sections 220 until the tensioning operation is complete (see, for example, FIG. 9 illustrating the ball bearings 212 at the "perched" position).

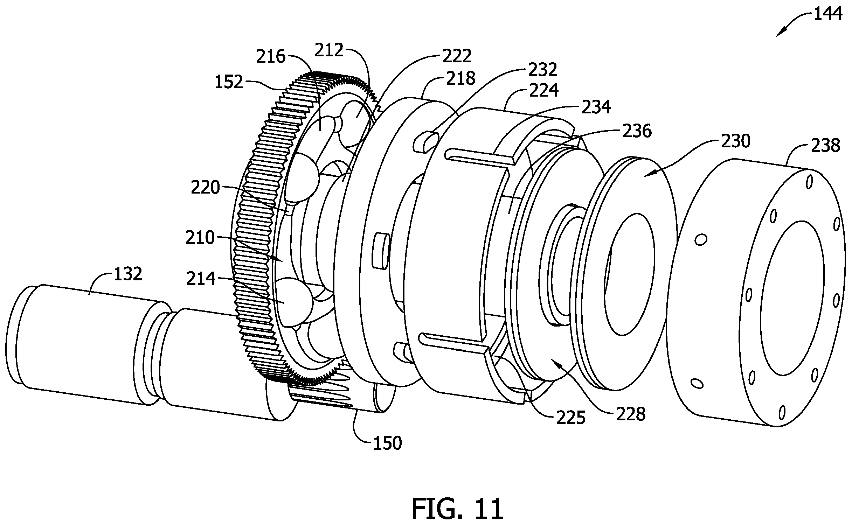

Once tensioning is complete, the gear 152 is actuated to rotate only slightly, for example, less than a complete rotation of the gear, which causes the bearing 212 to drop into the groove at the first end 214 (see, for example, FIG. 11). With this operation, the biasing force instantaneously forces separation of the shroud 224 from the disc 238. Such motion actuates sliding of the casing 182 to push against the end of the linkage 134 at point 183 (see FIG. 6B), and the linkage 134 applies a force for actuation/rotation of the cutting blade 136, thereby cutting the cable tie. In particular, as discussed above, sliding motion of the shroud 224 from the biasing force of the spring 226 imparts a force on the casing 182 which, in turn, imparts a frontward force on the linkage 134. Motion of the linkage 134 frontward actuates the blade 136 to pivot about a hinge connection, resulting in a cutting action. A spring 185 biases the linkage 134 back after the cutting action is completed, ensuring that the blade 136 is fully retracted such that the head 160 can receive the next cable tie for tensioning.

Traditional cutting mechanisms for cable tie tensioning devices typically cut the cable tie at a proximity of the desired tension and are not sufficiently accurate to cut the cable tie exactly at the desired tension. The cutting assembly 144 of the device 100 is electronically triggered with a dedicated motor 132. The mechanism is linked to the modular head 160. The ball bearing 212 ramp configuration for the cutoff mechanism provides an accurate operation for cutting of the cable tie. The configuration includes the ball bearings 212 situated relative to a circular pattern of teardrop shaped pockets 210 that act to temporarily compress a spring (or opposing magnets) whose stored energy will be abruptly released when the ball bearings 212 are allowed to fall into the deepest section of the radially arranged series of teardrop shaped ramped pockets 210.

The sliding shroud 224 is displaced axially when the ball bearings 212 are advanced to the top area of each radially situated ball ramp. When the shroud 224 is displaced axially, the wave spring (or opposing magnets) is compressed between the shroud 224 and the fixed disc 238. The ball bearings 212 are held in hemispherical detents on the passive disc 218 where they can roll relative to each hemispherical surface, but not escape the concentric relationship with the hemispherical detent. As the large driven gear 152 with ramped pockets 210 rotates (driven by tangentially fixed gear motor) relative to the captive ball bearings 212, the rotationally fixed but axially free bodies (for example, ball bearings, passive disc, sliding shroud) are pushed apart by the ball radius as it is revealed from within each pocket 210 and towards the fixed disc 238 (mechanical ground in system), thereby compressing the wave spring (or opposing magnets) located in series with the axially free, rotationally fixed bodies.

With the system cycled such that the ball bearings 212 are staged at the top of each ramp (for example, located on a small flat between each teardrop shape at intermediate sections 220), this can be referred to as the "loaded" state of system where it is ready to be released to act upon the cutting linkage 134 of cable tie. The motor 132 can be controlled in set increments. The transition from the "loaded" state to the "collapsed" can be initiated by the gear motor 132 incrementally advancing the large gear 152 (with ramped pockets) past the "crest" or flat area where ball bearings 212 have been located or perched. The ball bearings 212 are now free to fall into the deepest sections of ramped pockets 210 and in series allow the umbrella shroud 224 to collapse abruptly relative to axially fixed position of the large gear 152. The radial translation of the passive disc 218 is accelerated by the energy released from compressed spring (or opposing magnets). This passive degree of freedom (for example, approximately 10 degrees) is what allows the rapid collapse of the system in that moment now uncoupled from the gear motor 132. This combination is what allows the "snap" action required for a clean cut. If the passive degree of rotational freedom were removed, the ball bearings 212 could only advance at a rate at which the gear motor 132 would allow, whereas in the exemplary configuration, the ball bearings 212 are now free to move quickly into a collapsed position. This rotational DOF can also be referred to as "slack".

The cutoff mechanism is designed to be hollow. The hollow design of the discrete cutoff mechanism allows the detachable head 160 of the device 100 to be able to rotate 180 degrees. This benefits with maneuverability and access to difficult to reach cable ties. Allowing the trigger mechanism to be in line and compact with the loading and tension sensing systems greatly reduces the footprint of the device 100. The compactness of device 100 components improves the durability of the device 100, as less material is needed to house the power components. In some embodiments, the housing 114 can be heavy as the device 100 needs to survive in a manufacturing environment. The device 100 can be resistant to hits and drops. The cutting mechanism avoids long and weak cutting lever arms extending far into the device 100. Instead, the cutting arm only reaches to the end of the detachable nose and is kept short and secure.

The cut off mechanism design allows for a quick cut of the cable tie. Due to slack in the ball bearing 212 and slot/pocket design (protrusions 232 and slots 225), when a motor 132 initiates a cut the ball bearings 212 will "snap" into place. This quick snap benefits the device 100 user with decreased installation time. It also improves cut quality, leaving a clean-cut flush with the head of the cable tie. The flush cut removes the hazard of sharp edges on the tie tail. Sharp edges can lead to punctured or cut wires and scratching of skin during installation and maintenance.

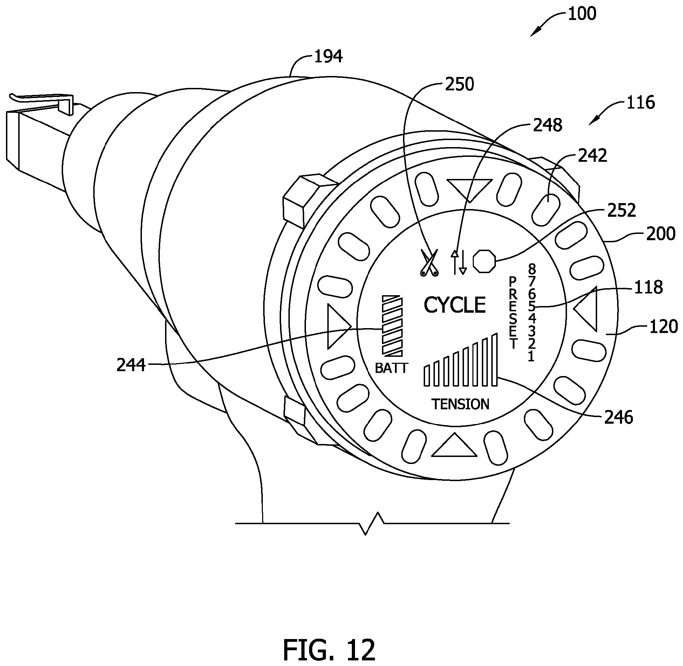

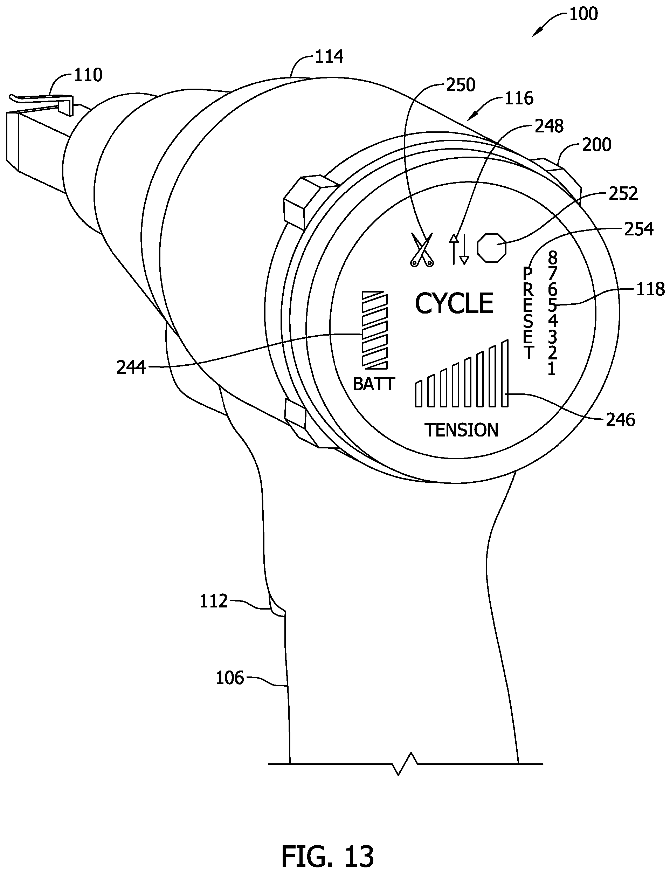

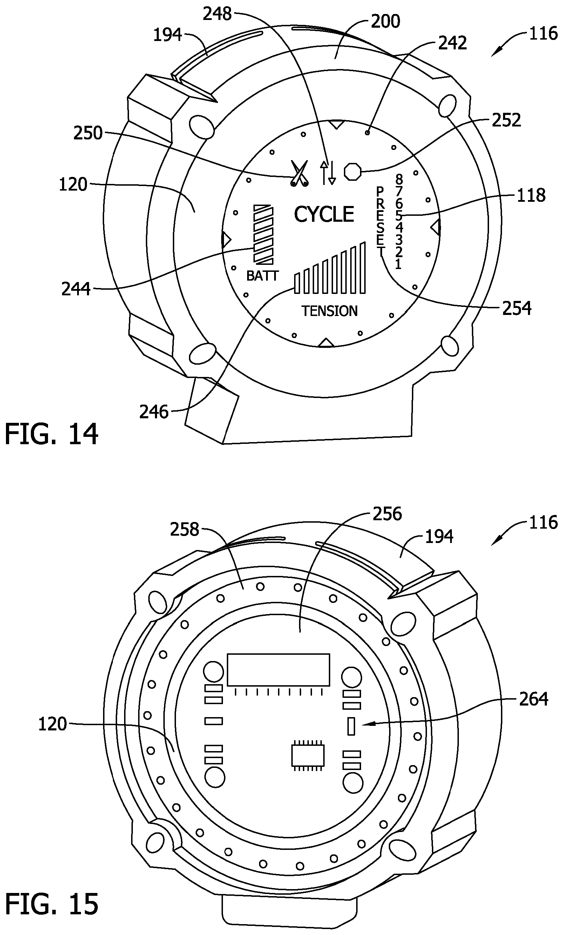

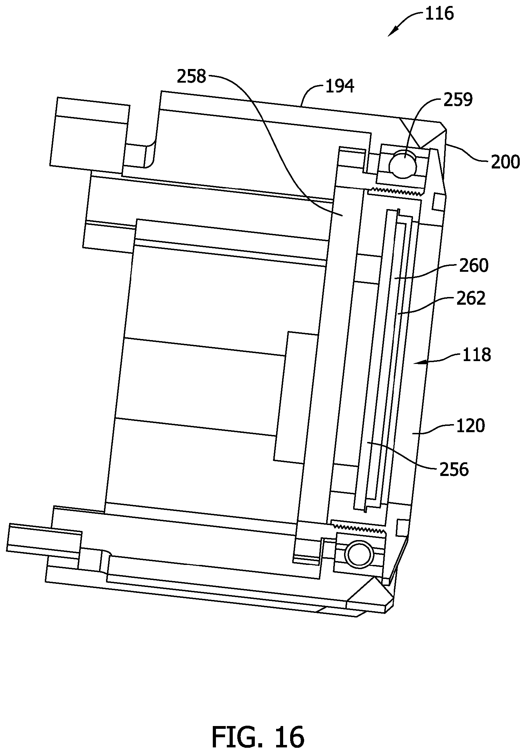

FIGS. 12-16 are perspective, detailed and cross-sectional views of the user interface 116 of the device 100 (for example, a digital display). FIGS. 12 and 14-16 show the device 100 with a rotatable bezel 120, while FIG. 13 shows the device 100 without the rotatable bezel 120. In some embodiments, the user interface 116 can include a non-rotatable bezel and a touch screen or other input means can be used to navigate the menu on the user interface 116.

The user interface 116 is configured to provide real-time information to the user regarding operation of the device 100. The user interface 116 includes a rotatable bezel 120, which can be movably secured to the housing 194 using the fastening ring 200. The bezel 120 can be rotated clockwise or counterclockwise to choose and set a tension to be applied on the cable tie. The bezel 120 can include visual indicators 242 (for example, LEDs) radially spaced which can illuminate to indicate to the user when a setting has been chosen. In some embodiments, rotation of the bezel 120 can display information on the GUI 118 regarding the tension being chosen. In some embodiments, rotation of the bezel 120 can allow the user to electronically move through menus or submenus displayed on the GUI 118. In some embodiments, rotation of the bezel 120 clockwise can increase the parameter selected, and rotation of the bezel 120 counterclockwise can reduce the parameter selected. In some embodiments, pressing the bezel 120 can confirm the selected parameter setting.

In some embodiments, the GUI 118 can display a variety of real-time information to the user. For example, the GUI 118 can include a battery indicator 244 showing the charge level of the power source 108. The GUI 118 can include a tension indicator 246 which provides accurate detected tension information based on signals received from the strain gauge 156. Thus, the user can see in real-time whether the desired tension is being reached, or the rise in the tension as the device 100 is operating in the tensioning cycle. In some embodiments, the GUI 118 can indicate to the user which stage of operation is currently occurring. For example, the GUI 118 can include a tensioning indicator 248, a cutting indicator 250, and a stop indicator 252, each of which can selectively illuminate when the device 100 is operating in the respective modes. In some embodiments, the GUI 118 can include a preset section 254 allows the user to save tensions for operation based on prior use of the device 100, allowing the user to quickly select the desired tension in the future (for example, through rotation of the bezel 120).

In some embodiments, the GUI 118 can display, for example, the set tension, the applied tension, the cut tension, the number of cable ties cut, the battery life, the application speed, the draw position, the WiFi connection, combinations thereof, or the like. In some embodiments, the set tension can range from about, for example, 0-50 lbs, 0-120 lbs, or the like. In some embodiments, the applied tension can be a real-time measurement in the range of about, for example, 0-50 lbs, 0-120 lbs, or the like. In some embodiments, the cut tension can range from about, for example, 0-50 lbs, 0-120 lbs, or the like. In some embodiments, the number of cable ties cut can range from about, for example, 0-10,000, or the like. In some embodiments, the battery life can range from about, for example, 0-100%. In some embodiments, the application speed can be between, for example, slow and fast. In some embodiments, the draw position can range from about, for example, 0-1.2 inches, or the like. In some embodiments, the WiFi connection can indicate the strength of the signal, for example, weak, intermediate, strong, or the like.

The user interface 116 can include a printed circuit board (PCB) 256 mounted to a support frame 258. An LED layer 260 can be mounted over the PCB 256, which is in turn covered by a protective outer layer 262 to form the GUI 118. The PCB 256 includes various electronics 264 for achieving operation and display of the GUI 118. The user interface 116 assembly can include bearings 259 that allow the bezel 120 to rotate relative to the housing 194.

Therefore, while traditional cable tie tensioning devices fail to provide user feedback on the applied cable tie tension, the exemplary device 100 offers a user interface 116 that provides real-time feedback to the user to ensure that accurate and consistent tension is applied to the cable tie. This prevents over and under-tensioning of the cable tie when using the device 100. In particular, the user interface 116 provides immediate feedback to the operator of the device 100 based on the strain gauge 156. The controller of the device 100 relies on the strain gauge 156 to measure tension and automatically calibrates the device 100 by regulating the motor 124 to achieve the intended tension. The user interface 116 also confirms to the user that the device 100 is functioning as expected/intended and provides an indication of the mode of operation for clarity. The user interface 116 allows for fine and precise tension setting and control input from the user.

The user interface 116 of the device 100 therefore provides several advantages for accurate operation. The user interface 116 offers data on performance of the device 100, such as pull tension, cutting tension, the number of ties process, or the like. The user interface 116 allows the user to set processing parameters and provides real-time feedback on whether the device 100 operates according to the set parameters. The user can monitor the applied tension on the cable tie through the display of the user interface 116, ensuring the correct level of force is being applied consistently across multiple installations, applications, or bundling types. Using the real-time feedback, the user can adjust the pressure applied to the trigger 112 to either increase or decrease the tension. In some embodiments, the pressure applied can be manual at the trigger 112 to gradually increase the tension on the cable tie. In some embodiments, the user interface 116 can receive the desired tension as input and the device 100 can automatically apply the tension to the cable tie with minimal pressure to the trigger 112 (for example, to indicate that initiation of tension application is desired). Thus, upon initial pressure on the trigger 112, the device 100 can operate until the target tension is reached without further user input (even if the user removes pressure from the trigger 112). The tensioning cycle can therefore continue without further user input.

As discussed herein, the user interface 116 (along with the strain gauge 156) offers a closed-loop control algorithm or feedback loop which initiates, monitors and controls the cable tie tensioning and cutting processes in a precise and repeatable manner. The feedback loop allows the user to monitor and adjust the tension being applied by the device 100 to ensure that the desired tension is used. This feedback loop is achieved through the use of an interactive screen for data display and input (for example, the user interface 116), the internal load cell for real-time tension measurement and calibration, motorized control for cable tie tensioning with a drive control, and motorized control for cable tie cutting action. Immediately after the target tension is detected, the cutting action can be initiated.

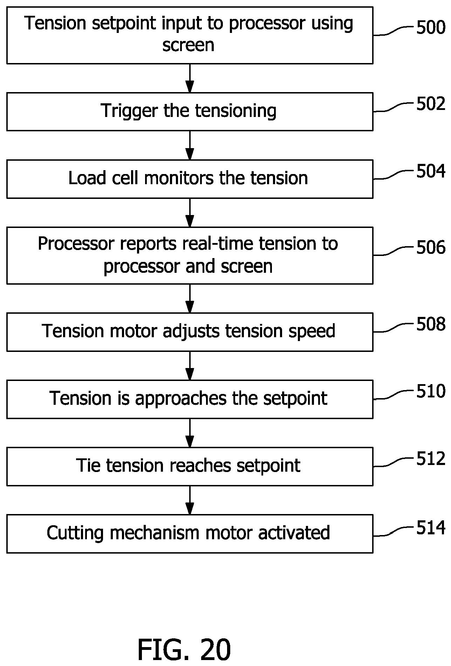

FIG. 20 is a flowchart illustrating the operational steps of the device 100. At 500, the tension setpoint can be input to the processor using the screen of the user interface. The targeted tie tensioning force, tensioning speed (or cycle time) can be input through the display and control unit. At 502, the trigger is used for tensioning of the cable tie. The input data is transferred to the microprocessor and the tensioning motor is activated. The motor speed is controlled by the integrated drive. The speed is determined by the encoding position, speed and load cell data used as real-time input into a control algorithm (such as PID) and is electronically controlled by the drive to meet the intended cycle time. At 504, the load cell monitors the tension applied to the cable tie in real time.

At 506, the processor reports the real-time tension to the processor and screen of the user interface. The real-time tension applied is therefore displayed on the screen, offering the closed-loop control. At 508, the tension motor adjusts the tension speed to meet the desired tension in the cable tie. At 510, the tension approaches the setpoint. Data from the motor's encoder, current draw, and targeted cycle time can be used to determine the signals sent to the driver to drive the motor. Force is continuously monitored by the load cell. At 512, the tie tension reaches the input setpoint. At 514, the cutting mechanism can be activated via a dedicated cutting motor. After cutting, the blade and cutting mechanism return to a "home" position in preparation for the next cycle. The cutting mechanism therefore resets and is ready for the next cycle of tensioning and cutting.

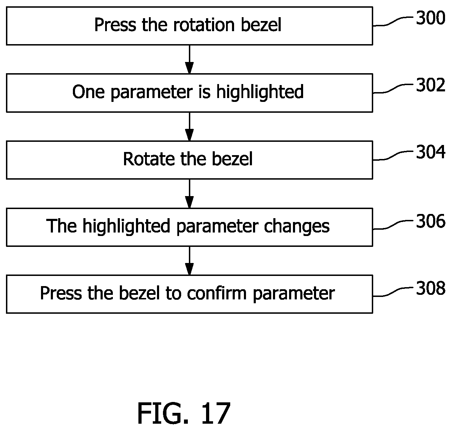

FIG. 17 is a flowchart illustrating one exemplary operation of the user interface 116. At 300, the bezel 120 can be pressed to initiate operation. At 302, one parameter associated with the device 100 operation is highlighted. At 304, the bezel 120 can be rotated relative to the housing 194, which changes the highlighted or selected parameter (at 306). After the desired parameter has been reached, at 308, the bezel 120 can be pressed to confirm the parameter. In some embodiments, the bezel 120 can be used to select the parameter and further choose a numerical value (for example, a tension value) by rotating the bezel 120. The bezel 120 can therefore operate as a selection or input means at the user interface 116. It should be understood that the PCB board and microcontroller of the device can be used for signal transmission and control to sense the load cell data and display information on the user interface 116.

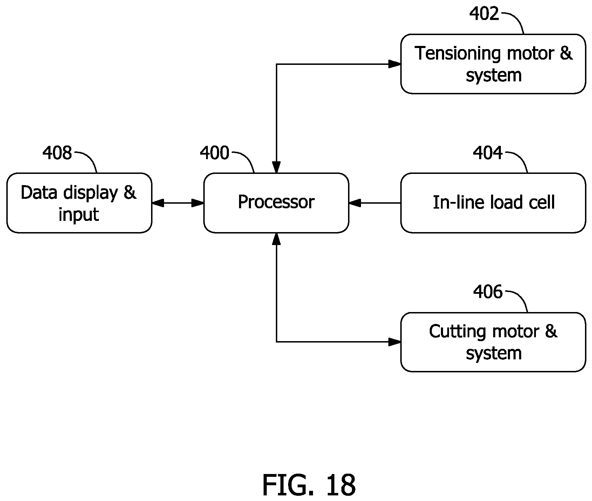

FIG. 18 is a block diagram of the device 100. **In** particular, the device 100 includes a processor 400 (for example, a microcontroller) which communicates with the tensioning assembly 402 (for example, tensioning motor 124), the inline load cell 404 (for example, the strain gauge 156), and the cutting assembly 406 (for example, cutting motor 132). For example, the processor 400 can detect the position of the tensioning motor 124 (for example, with an encoder) to determine the tension being applied to the cable tie. The processor 400 can receive signals from the load cell 404 to determine the real-time tension being applied to the cable tie. The signals from the load cell 404 can be used to adjust operation of the tensioning motor 124 in real-time, thereby providing a closed-loop control system for tensioning of the cable tie. Such closed-loop control system ensures that the tension applied to the cable tie is accurate and consistent with each use of the device 100. The processor 400 can receive signals from the encoder associated with the cutting motor 132 to determine the stage of cutting of the cable tie. All of this information can be displayed to the user at the user interface 408, and the user interface 408 can receive input from the user regarding operation of the device 100.

The data display and input at the user interface 408 sets up the targeted tensioning force, as well as the cycle time. These inputs are transferred/transmitted to the processor 400. As the tensioning process occurs, the real-time tensioning force is received from the processor 400 and shown on the display of the user interface 408. The processor 400 calculates and monitors the cycle time/process. The communication between the processor 400 and the tensioning assembly 402 (for example, motor and drive) is critical to achieve the desired tension force and cable tie protection. When the tie installation starts, the tensioning proceeds with a preset speed by the tensioning motor. The motor speed is monitored by the processor 400.

As the tensioning proceeds, the tensioning force can increase. The in-line load cell 404 monitors the tension in real-time, transferring the data to the processor 400, and displaying the tensioning force on the user interface 408. As the tensioning proceeds, the load is increased further. The processor 400 receives the tension signal, and the pre-loaded program sends signals to the motor to adjust the rotational speed based on an algorithm optimizing for accuracy and cycle-time (for example, PID). Control is used to avoid over-tensioning.

The parameters (for example, motor position and speed) of the tensioning motor are transmitted to the processor 400 and are monitored in real-time by the load cell 404. As the tensioning motor slows down, the cable tie reaches the targeted load at a desired slow speed, avoiding over-tensioning (and ultimate cable tie breakage). The cutting motor is triggered by the processor 400 when the desired tensioning force is achieved. The entire process can be monitored and controlled by the processor 400. The two-way communications between the processor 400 and components of the device (for example, display and tensioning motor) achieve the functions of the device essential to protecting the cable ties. **In** some embodiments, the processor 400 can monitor the location of the installation, details of the installation configurations, the processing recommendations for the tensioning parameters, or the like.

The various aspects illustrated by logical blocks, modules, circuits, processes, algorithms, and algorithm steps described above may be implemented as electronic hardware, software, or combinations of both. Certain disclosed components, blocks, modules, circuits, and steps are described in terms of their functionality, illustrating the interchangeability of their implementation in electronic hardware or software. The implementation of such functionality varies among different applications given varying system architectures and design constraints. Although such implementations may vary from application to application, they do not constitute a departure from the scope of this disclosure.

Aspects of embodiments implemented in software may be implemented in program code, application software, application programming interfaces (APIs), firmware, middleware, microcode, hardware description languages (HDLs), or any combination thereof. A code segment or machine-executable instruction may represent a procedure, a function, a subprogram, a routine, a subroutine, a module, a software package, a class, or any combination of instructions, data structures, or program statements. A code segment may be coupled to, or integrated with, another code segment or an electronic hardware by passing or receiving information, data, arguments, parameters, memory contents, or memory locations. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the claimed features or this disclosure. Thus, the operation and behavior of the systems and methods were described without reference to the specific software code being understood that software and control hardware can be designed to implement the systems and methods based on the description herein.

When implemented in software, the disclosed functions may be embodied, or stored, as one or more instructions or code on or in memory. In the embodiments described herein, memory includes non-transitory computer-readable media, which may include, but is not limited to, media such as flash memory, a random access memory (RAM), read-only memory (ROM), erasable programmable read-only memory (EPROM), electrically erasable programmable read-only memory (EEPROM), and non-volatile RAM (NVRAM). As used herein, the term "non-transitory computer-readable media" is intended to be representative of any tangible, computer-readable media, including, without limitation, non-transitory computer storage devices, including, without limitation, volatile and non-volatile media, and removable and non-removable media such as a firmware, physical and virtual storage, CD-ROM, DVD, and any other digital source such as a network, a server, cloud system, or the Internet, as well as yet to be developed digital means, with the sole exception being a transitory propagating signal. The methods described herein may be embodied as executable instructions, for example, "software" and "firmware," in a non-transitory computer-readable medium. As used herein, the terms "software" and "firmware" are interchangeable and include any computer program stored in memory for execution by personal computers, workstations, clients, and servers. Such instructions, when executed by a processor, configure the processor to perform at least a portion of the disclosed methods.

As used herein, an element or step recited in the singular and proceeded with the word "a" or "an" should be understood as not excluding plural elements or steps unless such exclusion is explicitly recited. Furthermore, references to "one embodiment" of the disclosure or an "exemplary" or "example" embodiment are not intended to be interpreted as excluding the existence of additional embodiments that also incorporate the recited features. Likewise, limitations associated with "one embodiment" or "an embodiment" should not be interpreted as limiting to all embodiments unless explicitly recited.

Disjunctive language such as the phrase "at least one of X, Y, or Z," unless specifically stated otherwise, is generally intended, within the context presented, to disclose that an item, term, etc. may be either X, Y, or Z, or any combination thereof (for example, X, Y, and/or Z). Likewise, conjunctive language such as the phrase "at least one of X, Y, and Z," unless specifically stated otherwise, is generally intended, within the context presented, to disclose at least one of X, at least one of Y, and at least one of Z.

The disclosed systems and methods are not limited to the specific embodiments described herein. Rather, components of the systems or steps of the methods may be utilized independently and separately from other described components or steps.

This written description uses examples to disclose various embodiments, which include the best mode, to enable any person skilled in the art to practice those embodiments, including making and using any devices or systems and performing any incorporated methods. The patentable scope is defined by the claims and may include other examples that occur to those skilled in the art. Such other examples are intended to be within the scope of the claims if they have structural elements that do not differ from the literal language of the claims, or if they include equivalent structural elements with insubstantial differences form the literal language of the claims.

Further disclosed herein is the subject-matter of the following clauses:
[1] A cable tie tensioning device, comprising: a motor mechanically coupled to a lead screw drive; a pulling shaft mechanically coupled at a first end to the lead screw drive; a tie handling jaw mechanically coupled to a second end of the lead screw drive, wherein the tie handling jaw is configured to at least partially receive a cable tie for tensioning of the cable tie during operation of the motor; and a sensor disposed in line with the motor and the lead screw drive.
[2] The cable tie tensioning device of clause 1, wherein the sensor is a load cell.
[3] The cable tie tensioning device of clause 1 or clause 2, wherein the sensor is disposed concentrically around the lead screw drive.
[4] The cable tie tensioning device of clause 1 or any preceding clause, wherein the motor, the lead screw drive, the pulling shaft, and the tie handling jaw form a tensioning assembly.
[5] The cable tie tensioning device of clause 4 or any preceding clause, wherein the sensor is configured to measure a tension applied to the cable tie with the tensioning assembly.
[6] The cable tie tensioning device of clause 1 or any preceding clause, wherein the motor and the lead screw drive share a first central longitudinal axis.
[7] The cable tie tensioning device of clause 6, wherein a second central longitudinal axis of the sensor is aligned with the first central longitudinal axis of the motor and the lead screw drive.
[8] The cable tie tensioning device of clause 1 or any preceding clause, wherein the pulling shaft and the tie handling jaw are disposed in line with the sensor, the motor, and the lead screw drive.
[9] A method for tensioning a cable tie, comprising: engaging at least a portion of the cable tie with a tie handling jaw of a cable tie tensioning device, the cable tie tensioning device including (i) a motor mechanically coupled to a lead screw drive, (ii) a pulling shaft mechanically coupled at a first end to the lead screw drive, (iii) and the tie handling jaw mechanically coupled to a second end of the lead screw drive; and measuring a tension applied to the cable tie with the tie handling jaw with a sensor disposed in line with the motor and the lead screw drive of the cable tie tensioning device.
[10] The method of clause 9, wherein the sensor is a load cell.
[11] The method of clause 9 or clause 10, wherein the sensor is disposed concentrically around the lead screw drive.
[12] The method of clause 9 or any of the clauses 9 to 11, wherein the motor and the lead screw drive share a first central longitudinal axis.
[13] The method of clause 12, wherein a second central longitudinal axis of the sensor is aligned with the first central longitudinal axis of the motor and the lead screw drive.
[14] The method of clause 9 or any of the clauses 9 to 13, wherein the pulling shaft and the tie handling jaw are disposed in line with the sensor, the motor, and the lead screw drive.
[15] A cable tie tensioning device, comprising: a lead screw drive having a first end and a second end; a direct current (DC) brushless motor mechanically coupled to the lead screw drive; a pulling shaft mechanically coupled at the first end to the lead screw drive; a tie handling jaw mechanically coupled to the second end of the lead screw drive, wherein the tie handling jaw is configured to at least partially receive a cable tie for tensioning of the cable tie during operation of the DC brushless motor; and a load cell disposed in line with the DC brushless motor and the lead screw drive, and disposed concentrically around the lead screw drive.
[16] The cable tie tensioning device of clause 15, wherein the DC brushless motor, the lead screw drive, the pulling shaft, and the tie handling jaw form a tensioning assembly.
[17] The cable tie tensioning device of clause 16 or clause 15, wherein the load cell is configured to measure a tension applied to the cable tie with the tensioning assembly.
[18] The cable tie tensioning device of clause 15 or any of the clauses 15 to 17, wherein the DC brushless motor and the lead screw drive share a first central longitudinal axis.
[19] The cable tie tensioning device of clause 18, wherein a second central longitudinal axis of the load cell is aligned with the first central longitudinal axis of the DC brushless motor and the lead screw drive.
[20] The cable tie tensioning device of clause 15 or any of the clauses 15 to 19, wherein the pulling shaft and the tie handling jaw are disposed in line with the load cell, the DC brushless motor, and the lead screw drive.

## Claims

1. A cable tie tensioning device (100), comprising:
a motor (124) mechanically coupled to a lead screw drive (154);
a pulling shaft (172) mechanically coupled at a first end to the lead screw drive;
a tie handling jaw (110) mechanically coupled to a second end of the lead screw drive,
wherein the tie handling jaw is configured to at least partially receive a cable tie for tensioning of the cable tie during operation of the motor; and
a sensor (138, 156, 404) disposed in line with the motor and the lead screw drive.

2. The cable tie tensioning device of claim 1, wherein the sensor is a load cell (138, 156, 404).

3. The cable tie tensioning device of claim 1 or 2, wherein the sensor is disposed concentrically around the lead screw drive.

4. The cable tie tensioning device of any one of claims 1 to 3, wherein the motor, the lead screw drive, the pulling shaft, and the tie handling jaw form a tensioning assembly (122).

5. The cable tie tensioning device of claim 4, wherein the sensor is configured to measure a tension applied to the cable tie with the tensioning assembly.

6. The cable tie tensioning device of any one of claims 1 to 5, wherein the motor and the lead screw drive share a first central longitudinal axis (168).

7. The cable tie tensioning device of claim 6, wherein a second central longitudinal axis of the sensor is aligned with the first central longitudinal axis of the motor and the lead screw drive.

8. The cable tie tensioning device of any one of claims 1 to 7, wherein the pulling shaft and the tie handling jaw are disposed in line with the sensor, the motor, and the lead screw drive.

9. A method for tensioning a cable tie, comprising:
engaging (502) at least a portion of the cable tie with a tie handling jaw (110) of a cable tie tensioning device, the cable tie tensioning device including (i) a motor (124) mechanically coupled to a lead screw drive (154), (ii) a pulling shaft (172) mechanically coupled at a first end to the lead screw drive, (iii) and the tie handling jaw mechanically coupled to a second end of the lead screw drive; and
measuring (504) a tension applied to the cable tie with the tie handling jaw with a sensor (138, 156, 404) disposed in line with the motor and the lead screw drive of the cable tie tensioning device.

10. The method of claim 9, wherein the sensor is a load cell (138, 156, 404).

11. The method of claim 9 or 10, wherein the sensor is disposed concentrically around the lead screw drive.

12. The method of any one of claims 9 to 11, wherein the motor and the lead screw drive share a first central longitudinal axis (168).

13. The method of claim 12, wherein a second central longitudinal axis of the sensor is aligned with the first central longitudinal axis of the motor and the lead screw drive.

14. The method of any one of claims 9 to 13, wherein the pulling shaft and the tie handling jaw are disposed in line with the sensor, the motor, and the lead screw drive.
